(19) Europäisches Patentamt

European Patent Office

Office européen des brevets

(11) **EP 2 619 535 B1**

(12) **FASCICULE DE BREVET EUROPEEN**

(45) Date de publication et mention de la délivrance du brevet:
**07.01.2015 Bulletin 2015/02**

(21) Numéro de dépôt: **11757347.7**

(22) Date de dépôt: **19.09.2011**

(51) Int Cl.:
*G01L 9/08* *(2006.01)*  *G01K 11/26* *(2006.01)*
*G01L 9/00* *(2006.01)*  *G01L 19/00* *(2006.01)*

(86) Numéro de dépôt international:
**PCT/EP2011/066217**

(87) Numéro de publication internationale:
**WO 2012/038375 (29.03.2012 Gazette 2012/13)**

(54) **CAPTEUR DE PRESSION ET DE TEMPERATURE BAS COUT COMPORTANT DES RESONATEURS SAW ET SON PROCEDE DE FABRICATION**

KOSTENGERINGER DRUCK- UND TEMPERATURSENSOR MIT SAW-RESONATOREN SOWIE HERSTELLUNGSVERFAHREN DAFÜR

LOW-COST PRESSURE AND TEMPERATURE SENSOR COMPRISING SAW RESONATORS, AND METHOD FOR MANUFACTURING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.09.2010 FR 1057594**

(43) Date de publication de la demande:
**31.07.2013 Bulletin 2013/31**

(73) Titulaire: **Senseor**
**06560 Valbonne (FR)**

(72) Inventeurs:
• **CHOMMELOUX, Luc**
  **F-06110 Le Cannet (FR)**
• **MENAGE, Philippe**
  **F-06140 Vence (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A1- 2004 216 526    US-A1- 2005 231 067**
**US-A1- 2006 130 585    US-A1- 2009 100 935**

# Description

Le domaine de l'invention est celui des capteurs passifs interrogeables à distance et notamment des capteurs de contrainte et en particulier les capteurs de pression et de température à base de résonateurs à ondes acoustiques de surface, appelés couramment SAW (de l'anglais « Surface Acoustic Wave »). Le document US 2006/0130585 ou le document US 2005/0231067 donnent des exemples de ce type de capteurs.

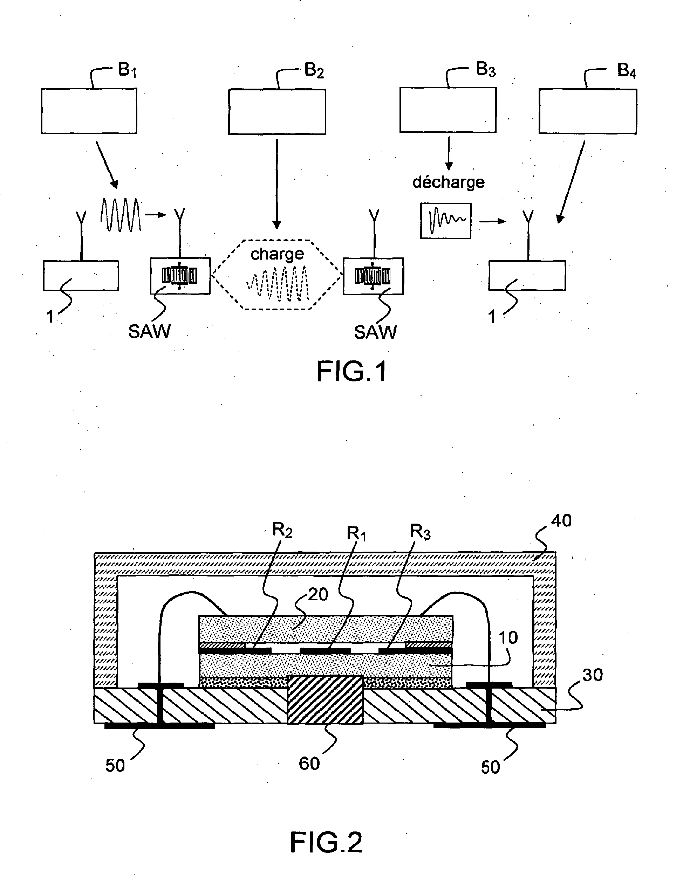

Le principe d'interrogation d'un capteur SAW à base de résonateur est illustré en figure 1.

Le système complet se compose d'une unité d'interrogation (constitué elle-même d'une partie émetteur et d'une partie récepteur) et du capteur de pression SAW. Le système d'interrogation ainsi que le capteur SAW sont munis d'une antenne adaptée à la bande de fréquence de travail (bande ISM 433 MHz, 868 MHz, 2.45 GHz,...) ce qui permet d'effectuer une interrogation sans fil du capteur.

Le mode d'interrogation est le suivant :

L'émetteur du système d'interrogation 1 envoie un signal d'interrogation vers le capteur SAW à une fréquence proche de la fréquence de résonance du capteur correspondant à l'étape schématisée par le bloc B1 :

- le signal électromagnétique reçu par l'antenne du capteur est converti en onde de surface via un structure à peignes inter-digités qui se charge grâce aux propriétés piézoélectriques du substrat utilisé (quartz par exemple) correspondant au résonateur de type SAW, étape illustrée par le bloc B2, cette onde de surface voit ses propriétés modifiées en fonction de la pression et/ou de la température qui affectent les conditions de propagation (vitesse en particulier qui va affecter la fréquence de résonance ;
- le capteur re-émet un écho à sa fréquence de résonance propre qui porte l'information liée au phénomène que l'on cherche à identifier : variation de température et/ou de pression, étape B3 ;
- le récepteur du système d'interrogation 1 détecte en dehors de la plage temporelle d'émission tout ou partie de l'écho du capteur SAW et extrait de la réponse reçue l'information recherchée pouvant concernée la température et/ou la pression, étape B4.

De manière générale, la structure à peignes inter-digitées peut être intégrée entre des réflecteurs, créant une cavité résonante caractérisée par une certaine fréquence de résonance. Cette fréquence dépend en premier lieu de la vitesse de propagation des ondes sous le réseau qui dépend elle-même principalement de l'état physique du substrat. Elle est donc sensible aux effets de contraintes appliquées sur le substrat. C'est donc à partir de la variation de fréquence induite mesurée par le système d'interrogation que l'état de contrainte en particulier, peut être évalué.

Dans le cas d'une mesure de contrainte, par exemple un effet de pression hydrostatique, il est possible de réaliser une mesure différentielle. Si l'on utilise deux résonateurs conçus pour être compensés des effets thermiques quasi-statiques à la température de travail du capteur, et dont seul l'un des deux est soumis aux effets de contrainte, alors la différence de fréquence entre les deux résonateurs est représentative uniquement des effets de contrainte. Une telle mesure est ainsi dite référencée.

Dans le cas d'un capteur de pression utilisant une référence, au moins un des résonateurs est sensible à la pression appliquée. Cela peut être réalisé en localisant par exemple le résonateur sur une partie amincie du substrat piézoélectrique. Sa variation de fréquence est linéaire en fonction de la pression (dans la limite des déformations linéaires) :

$$f(P) = f(P_0) + Sp \times P$$

Sp (exprimée en KHz par MPa par exemple) désigne la sensibilité à la pression. Celle-ci dépend de la géométrie du diaphragme et des propriétés du substrat piézoélectrique. P désigne la surpression (ou sous pression) par rapport à la pression de référence $P_0$.

Selon l'art connu, un capteur de pression et de température peut avantageusement être fondé sur une structure différentielle utilisant trois résonateurs SAW.

Un premier résonateur dit de pression utilise l'axe de propagation X, comme un second résonateur RSAW, mais est positionné dans une zone amincie de sorte que quand une surpression ou une sous pression (par rapport à la pression de la cavité) est exercée sur la face inférieure du dispositif, la fréquence dudit premier résonateur varie proportionnellement. Ledit premier résonateur utilise la même direction de propagation que le second résonateur (même dépendance de la fréquence en fonction de la température). La différence de fréquence entre les premier et second résonateurs permet par conséquent d'obtenir une information uniquement liée à la pression exercée sur la face inférieure du dispositif indépendante de la température.

Le second résonateur utilisant l'axe de propagation habituel X est situé dans une zone exempte de contraintes. Un troisième résonateur également localisé dans une zone exempte de contraintes, est incliné d'un certain angle typiquement 20° par rapport à l'axe X. Le fait d'incliner ledit troisième résonateur confère à ce dernier une sensibilité différente vis à vis de la température. La différence de fréquence entre les second et troisième résonateurs permet par conséquent d'obtenir une information uniquement liée à la température indépendante de l'état de la pression exercée sur la face inférieure du dispositif.

Le fait d'utiliser une structure différentielle présente l'avantage de diminuer la non linéarité du capteur sachant que les non linéarités résiduelles sont corrigées par le calibrage du capteur. Un autre avantage de la structure différentielle réside dans le fait que l'on peut s'affranchir en grande partie des effets de vieillissement.

Un exemple de réalisation d'un capteur SAW pour mesurer la pression et la température selon l'état de l'art est par ailleurs illustré en figure 2. Selon cette configuration, le capteur de type puce en quartz (puce AQP pour « All Quartz Package ») est constitué d'une embase 10 contenant les résonateurs SAW : $R_1$, $R_2$ et $R_3$ et d'un capot 20 en quartz solidaire de l'embase via un cordon de pâte de verre). L'embase est par ailleurs collée sur un circuit imprimé 30 compatible des températures d'utilisation, l'ensemble étant fermé par un couvercle de protection 40 en matériau plastique.

La puce comporte ainsi les trois résonateurs $R_1$, $R_2$ et $R_3$. Le résonateur $R_1$ est localisé sur une zone amincie (membrane obtenue par un procédé d'usinage mécanique par exemple) et sa fréquence de résonance dépend par conséquent de la pression extérieure et de la température. La pression extérieure est transmise via un gel silicone 60 incompressible (par exemple) qui remplit le diaphragme.

Le résonateur $R_2$ présente une structure très voisine de celle du résonateur $R_1$ mais est positionné dans une zone où les contraintes liées à la pression sont négligeables (zone non amincie). Le résonateur $R_2$ présente en particulier la même sensibilité à la température que le résonateur $R_1$. La différence de fréquence entre les résonateurs $R_1$ et $R_2$ fournit par conséquent une information qui dépend majoritairement de la pression.

Le résonateur $R_3$ est également positionné dans une zone où les contraintes liées à la pression sont négligeables. Celui-ci est incliné par rapport aux résonateurs $R_1$ et $R_2$. Cette orientation lui confère une sensibilité différente en température par rapport au résonateur $R_2$ en particulier. La différence de fréquence entre les résonateurs $R_2$ et $R_3$ fournit par conséquent une information qui dépend uniquement de la température.

Ce type de structure présente néanmoins quelques inconvénients :

- celle-ci nécessite un calibrage individuel des capteurs en pression et en température du fait des dispersions technologiques des procédés de fabrication des résonateurs et d'usinage du substrat quartz pour réaliser la membrane ;
- l'insensibilité aux contraintes associées à la pression du gaz ou du fluide des résonateurs $R_2$ et $R_3$ dépend fortement des tolérances d'assemblage en particulier du collage de la puce AQP ;
- le coût des puces AQP est élevé du fait de la complexité du procédé de fabrication. Celui-ci requière en effet une première phase de perçage des wafers capot (qui ainsi fragilisés génèrent des problèmes de rendement), une phase de dépôt de pâte de verre sur les wafers capot et un procédé de scellement verre.

C'est pourquoi dans ce contexte, la présente invention a pour objet une nouvelle architecture comprenant un boîtier avec embase céramique similaire en tout point à la technologie des boîtiers standards utilisés dans l'industrie microélectronique.

Plus précisément la présente invention a pour objet un capteur de pression et de température comprenant au moins un premier résonateur de type SAW comportant un substrat piézoélectrique au moins localement aminci de type membrane, un second résonateur de type SAW comprenant un substrat piézoélectrique et un troisième résonateur de type SAW comprenant un substrat piézoélectrique, caractérisé en ce que le premier, le second et le troisième résonateurs sont respectivement à la surface d'un premier, second et troisième substrats unitaires piézoélectriques, chacun des substrats unitaires étant positionné à la surface d'une embase commune, localement percée sous le premier résonateur de manière à dégager le substrat dudit résonateur pour le rendre opérationnel à la mesure de pression.

Selon une variante de l'invention, les premier, second et troisième substrats unitaires sont en quartz.

Selon une variante de l'invention, les premier et second substrats unitaires présentent une première coupe de quartz, le troisième substrat unitaire présentant une seconde coupe de quartz.

Selon une variante de l'invention, le capteur comprend un capot à la surface de ladite embase, commun aux trois résonateurs.

Selon une variante de l'invention, le capot est métallique.

Selon une variante de l'invention, les résonateurs sont réalisés sur une embase céramique. Avantageusement cette embase céramique est un substrat de type HTCC pour « High Temperature Cofired Ceramic ».

Selon une variante de l'invention, le capot et l'embase sont en contact direct.

Selon une variante de l'invention, les trois substrats sont solidarisés à ladite embase par une même colle.

Selon une variante de l'invention, le premier substrat est solidarisé de l'embase avec une première colle, les second et troisième substrats étant solidarisés de l'embase avec une seconde colle.

L'invention a aussi pour objet un procédé de fabrication d'un capteur selon l'invention, caractérisé en ce qu'il comprend les étapes suivantes :

- la réalisation d'un premier, d'un second et d'un troisième résonateurs comprenant respectivement un premier, un second et un troisième substrats unitaires piézoélectriques, le premier résonateur comportant en outre au moins une partie de substrat amincie, de manière à définir trois puces unitaires ;

- l'assemblage desdites puces unitaires à la surface d'une embase commune ;
- le perçage local de ladite embase de manière à dégager le premier substrat et le rendre opérationnel à des variations de pression.

Selon une variante de l'invention, le procédé comprend une étape d'amincissement du premier substrat réalisée par un procédé de micro-usinage, après assemblage des trois puces unitaires sur ladite embase.

Selon une variante de l'invention, le procédé comporte une étape d'amincissement dudit premier substrat avant assemblage desdites puces sur ladite embase.

Selon une variante de l'invention, le procédé comporte en outre une étape de report de capot sur ladite embase.

Selon une variante de l'invention, les puces sont solidarisées à l'embase avec une colle.

Selon une variante de l'invention, les puces sont solidarisées de l'embase avec une pâte de verre.

L'invention sera mieux comprise et d'autres avantages apparaîtront à la lecture de la description qui va suivre donnée à titre non limitatif et grâce aux figures annexées parmi lesquelles :

- la figure 1 illustre le principe d'interrogation sans fil d'un capteur SAW constitué d'un résonateur selon l'art connu ;
- la figure 2 illustre un exemple de capteur de pression et de température utilisant trois résonateurs de type SAW selon l'art connu ;
- la figure 3 illustre un premier exemple de capteur de pression et de température selon la présente invention ;
- la figure 4 illustre un second exemple de capteur de pression et de température selon la présente invention.

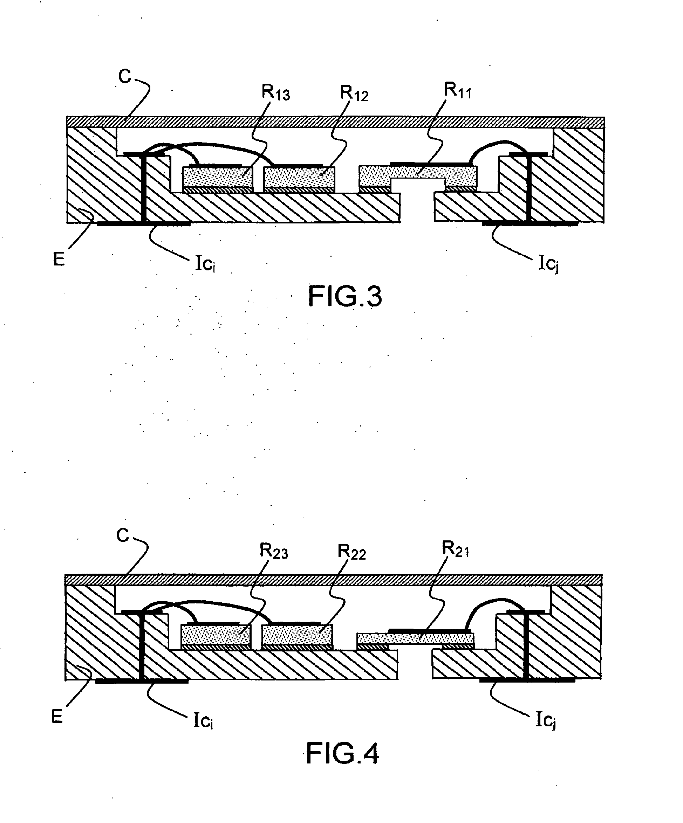

Selon la présente invention, le capteur de pression et de température comprend trois puces séparées comme illustré en figure 3. Plus précisément, chacune des puces comporte un substrat unitaire piézoélectrique à la surface duquel sont réalisés des jeux d'électrodes de manière à définir trois résonateurs $R_{11}$, $R_{12}$ et $R_{13}$, ces trois puces étant solidarisées sur une embase commune E dans laquelle sont réalisés des circuits d'interconnexion $I_{Ci}$ et $I_{Cj}$ de manière à pouvoir connecter l'ensemble desdits résonateurs. L'embase est localement percée de manière à dégager le substrat du résonateur $R_{11}$ dédié aux mesures de pression et le rendre opérationnel aux mesures de pression comme explicité précédemment, ledit résonateur $R_{11}$ présentant une membrane piézoélectrique sensible aux variations de pression dans un environnement donné. L'ensemble est rendu hermétique grâce à l'emploi d'un capot C fixé sur ladite embase (également grâce au mode de la puce R11) et permettant ainsi d'encapsuler l'ensemble des résonateurs.

Avantageusement l'embase peut être de type « HTCC » pour « High Température Cofired Ceramic » correspondant à un support céramique composé de plaques diélectriques en céramique, préalablement muni de motifs conducteurs, résistances, capacités, et de trous métallisés pour les connexions entre les plaques.

Une telle configuration présente un certain nombre d'avantages :

- le fait de disposer de trois puces séparées permet d'appliquer les procédés d'appairage nécessaires pour obtenir un capteur sans calibrage ;
- le fait de pouvoir utiliser une coupe de quartz différente pour le résonateur $R_{13}$ par rapport aux résonateurs $R_{11}$ et $R_{12}$ permet de s'affranchir des difficultés de conception du résonateur $R_{13}$ puisque celui-ci peut utiliser l'axe de propagation X habituel. La dispersion de fréquence liée aux tolérances de fabrication est de surcroît diminuée ce qui peut permettre d'augmenter in fine la précision du capteur ;
- la séparation des trois puces permet également d'obtenir une amélioration de l'isolation mécanique entre la zone avec contraintes correspondant à la zone dans laquelle est située le résonateur $R_{11}$ et la zone avec contraintes minimales dans laquelle sont positionnés les résonateurs $R_{12}$ et $R_{13}$.

Avantageusement, la même colle est utilisée pour les trois résonateurs afin d'avoir une compensation optimale des contraintes engendrées par la différence de coefficient de dilatation thermique CTE entre l'embase céramique, la colle et les puces SAW. La colle utilisée doit également permettre de garantir l'herméticité du capteur grâce au collage de la puce relative au résonateur $R_{11}$.

Par ailleurs, le coût de fabrication d'un tel capteur est fortement réduit par rapport à la configuration de capteur selon l'art connu et illustré en figure 2 du fait que toutes les opérations d'usinage des capots, de dépôt de pâte de verre, et de scellement verre sont éliminées. Outre l'économie de la matière (wafer capot), le test électrique après scellement verre n'a plus lieu d'être. le fait de ne plus utiliser de scellement verre permet également de diminuer la taille des puces et de facto de diminuer le coût de fabrication de celles-ci (augmentation du nombre de dispositifs par wafers).

Il est à noter également que l'utilisation d'un boîtier céramique (type HTCC standard) avec capot métallique (fermeture par soudure électrique pour être compatible de températures d'utilisation élevées) permet également de réduire significativement le prix du composant dans une gamme compatible des marchés gros volumes tout en conservant la possibilité d'avoir une encapsulation sous vide propice à la maximisation de la surtension des résonateurs (impact sur le bilan de liaison et par conséquent sur la distance d'interrogation).

Une variante de l'invention représentée en figure 4 illustre un second exemple de capteur selon l'invention

On procède à une étape d'amincissement du substrat piézoélectrique avant ou après découpe de la puce comportant le résonateur $R_{21}$ et on reporte celle-ci avec le même procédé que celui décrit précédemment.

La figure 4 met en évidence les trois résonateurs $R_{21}$, $R_{22}$ et $R_{23}$ Cette solution présente l'avantage de ne plus avoir à employer de procédé de micro-usinage local qui peut être couteux.

**Revendications**

1. Capteur de pression et de température comprenant au moins un premier résonateur ($R_{11}$, $R_{21}$) de type SAW comportant un substrat piézoélectrique au moins localement aminci de type membrane, un second résonateur ($R_{12}$, $R_{22}$) de type SAW comprenant un substrat piézoélectrique et un troisième résonateur ($R_{13}$, $R_{23}$) de type SAW comprenant un substrat piézoélectrique, **caractérisé en ce que** le premier, le second et le troisième résonateurs sont respectivement à la surface d'un premier, second et troisième substrats unitaires piézoélectriques, chacun des substrats unitaires étant positionné à la surface d'une embase commune (E), localement percée sous ledit premier résonateur ($R_{11}$) de manière à dégager le substrat dudit résonateur pour le rendre opérationnel à la mesure de pression.

2. Capteur de pression et de température selon la revendication 1, **caractérisé en ce que** les premier, second et troisième substrats unitaires sont en quartz.

3. Capteur de pression et de température selon la revendication 2, **caractérisé en ce que** les premier et second substrats unitaires présentent une première coupe de quartz, le troisième substrat unitaire présentant une seconde coupe de quartz.

4. Capteur de pression et de température selon l'une des revendications 1 à 3, **caractérisé en ce qu'**il présente un capot (C) à la surface de ladite embase, commun aux trois résonateurs.

5. Capteur de pression et de température selon l'une des revendications 1 à 4, **caractérisé en ce qu'**il comprend un capot métallique.

6. Capteur de pression et de température selon l'une des revendications 1 à 5, **caractérisé en ce que** les résonateurs sont réalisés sur une embase céramique.

7. Capteur de pression et de température selon l'une des revendications 1 à 6, **caractérisé en ce que** le capot et l'embase sont en contact direct.

8. Capteur de pression et de température selon l'une des revendications 1 à 7, **caractérisé en ce que** les trois substrats sont solidarisés à ladite embase par une même colle.

9. Capteur de pression et de température selon l'une des revendications 1 à 7, **caractérisé en ce que** le premier substrat est solidarisé de l'embase avec une première colle, les second et troisième substrats étant solidarisés de l'embase avec une seconde colle.

10. Procédé de fabrication d'un capteur selon l'une des revendications 1 à 9, **caractérisé en ce qu'**il comprend les étapes suivantes :

    - la réalisation d'un premier, d'un second et d'un troisième résonateurs comprenant respectivement un premier, un second et un troisième substrats unitaires piézoélectriques, le premier résonateur comportant en outre au moins une partie de substrat amincie, de manière à définir trois puces unitaires ;
    - l'assemblage desdites puces unitaires à la surface d'une embase commune ;
    - le perçage local de ladite embase de manière à dégager le premier substrat ($R_{11}$) et le rendre opérationnel à des variations de pression.

11. Procédé de fabrication d'un capteur selon la revendication 10, **caractérisé en ce qu'**il comprend une étape d'amincissement du premier substrat réalisée par un procédé de micro-usinage, après assemblage des trois puces unitaires sur ladite embase.

12. Procédé de fabrication selon la revendication 11, **caractérisé en ce qu'**il comporte une étape d'amincissement dudit premier substrat avant assemblage desdites puces sur ladite embase.

13. Procédé de fabrication selon l'une des revendications 11 à 12, **caractérisé en ce qu'**il comporte en outre une étape de report de capot sur ladite embase.

14. Procédé de fabrication selon l'une des revendications 11 à 13, **caractérisé en ce que** les puces sont solidarisées à l'embase avec une colle.

**Patentansprüche**

1. Druck- und Temperatursensor, umfassend wenigstens einen ersten Resonator ($R_{11}$, $R_{21}$) des SAW-Typs mit einem wenigstens lokal verdünnten piezoelektrischen Substrat des Membrantyps, einen zweiten Resonator ($R_{12}$, $R_{22}$) des SAW-Typs mit einem piezoelektrischen Substrat und einen dritten Resonator ($R_{13}$, $R_{23}$) des SAW-Typs mit einem piezoelektrischen Substrat, **dadurch gekennzeichnet, dass** der erste, zweite und dritte Resonator jeweils auf der Oberfläche eines ersten, zweiten und dritten einzelnen piezoelektrischen Substrats sind, wobei die einzelnen Substrate alle auf der Oberfläche einer gemeinsamen Basis (E) positioniert sind, die lokal unter dem ersten Resonator ($R_{11}$) perforiert ist, um das Substrat von dem Resonator zu lösen, um es zum Messen von Druck einsatzfähig zu machen.

2. Druck- und Temperatursensor nach Anspruch 1, **dadurch gekennzeichnet, dass** das erste, zweite und dritte einzelne Substrat aus Quarz sind.

3. Druck- und Temperatursensor nach Anspruch 2, **dadurch gekennzeichnet, dass** das erste und zweite einzelne Substrat einen ersten Quarzschnitt aufweisen, wobei das dritte einzelne Substrat einen zweiten Quarzschnitt aufweist.

4. Druck- und Temperatursensor nach einem der Ansprüche 1 bis 3, **dadurch gekennzeichnet, dass** er eine Kappe (C) auf der Oberfläche der Basis hat, die allen drei Resonatoren gemeinsam ist.

5. Druck- und Temperatursensor nach einem der Ansprüche 1 bis 4, **dadurch gekennzeichnet, dass** er eine Metallkappe umfasst.

6. Druck- und Temperatursensor nach einem der Ansprüche 1 bis 5, **dadurch gekennzeichnet, dass** die Resonatoren auf einer Keramikbasis realisiert sind.

7. Druck- und Temperatursensor nach einem der Ansprüche 1 bis 6, **dadurch gekennzeichnet, dass** die Kappe und die Basis in direktem Kontakt sind.

8. Druck- und Temperatursensor nach einem der Ansprüche 1 bis 7, **dadurch gekennzeichnet, dass** die drei Substrate mit demselben Klebstoff an der Basis befestigt sind.

9. Druck- und Temperatursensor nach einem der Ansprüche 1 bis 7, **dadurch gekennzeichnet, dass** das erste Substrat mit einem ersten Klebstoff an der Basis befestigt ist, wobei das zweite und dritte Substrat mit einem zweiten Klebstoff an der Basis befestigt sind.

10. Verfahren zur Herstellung eines Sensors nach einem der Ansprüche 1 bis 9, **dadurch gekennzeichnet, dass** es die folgenden Schritte beinhaltet:

- Herstellen eines ersten, eines zweiten und eines dritten Resonators jeweils mit einem ersten, einem zweiten und einem dritten einzelnen piezoelektrischen Substrat, wobei der erste Resonator ferner wenigstens einen verdünnten Substratteil umfasst, so dass drei einzelne Chips definiert werden;
- Montieren der einzelnen Chips auf der Oberfläche einer gemeinsamen Basis;
- lokales Perforieren der Basis, um das erste Substrat ($R_{11}$) zu lösen und es für Druckvariationen einsatzfähig zu machen.

11. Verfahren zur Herstellung eines Sensors nach Anspruch 10, **dadurch gekennzeichnet, dass** es einen Schritt des Verdünnens des ersten Substrats beinhaltet, hergestellt mit einem Mikrobearbeitungsverfahren, nach dem Montieren der drei einzelnen Chips an der Basis.

12. Herstellungsverfahren nach Anspruch 11, **dadurch gekennzeichnet, dass** es einen Schritt des Verdünnens des ersten Substrats vor dem Montieren der Chips an der Basis beinhaltet.

13. Herstellungsverfahren nach einem der Ansprüche 11 bis 12, **dadurch gekennzeichnet, dass** es ferner einen Schritt des Übertragens der Kappe auf die Basis beinhaltet.

14. Herstellungsverfahren nach einem der Ansprüche 11 bis 13, **dadurch gekennzeichnet, dass** die Chips mit Klebstoff an der Basis befestigt werden.

## Claims

1. A pressure and temperature sensor comprising at least one first resonator ($R_{11}$, $R_{21}$) of the SAW type comprising an at least locally thin piezoelectric substrate of the membrane type, a second resonator ($R_{12}$, $R_{22}$) of the SAW type comprising a piezoelectric substrate and a third resonator ($R_{13}$, $R_{23}$) of the SAW type comprising a piezoelectric substrate, **characterised in that** said first, second and third resonators are respectively on the surface of a first, second and third individual piezoelectric substrate, with each of said individual substrates being positioned on the surface of a common base (E), which is locally perforated under said first resonator ($R_{11}$) so as to release the substrate from said resonator in order to render it operational for measuring pressure.

2. The pressure and temperature sensor according to claim 1, **characterised in that** said first, second and third individual substrates are made of quartz.

3. The pressure and temperature sensor according to claim 2, **characterised in that** said first and second individual substrates have a first quartz slice, with said third individual substrate having a second quartz slice.

4. The pressure and temperature sensor according to any one of claims 1 to 3, **characterised in that** it has a cap (C) on the surface of said base, which cap is common to said three resonators.

5. The pressure and temperature sensor according to any one of claims 1 to 4, **characterised in that** it comprises a metal cap.

6. The pressure and temperature sensor according to any one of claims 1 to 5, **characterised in that** said resonators are produced on a ceramic base.

7. The pressure and temperature sensor according to any one of claims 1 to 6, **characterised in that** said cap and said base are in direct contact.

8. The pressure and temperature sensor according to any one of claims 1 to 7, **characterised in that** said three substrates are rigidly connected to said base by means of the same adhesive.

9. The pressure and temperature sensor according to any one of claims 1 to 7, **characterised in that** said first substrate is rigidly connected to said base by means of a first adhesive, with said second and third substrates being rigidly connected to said base with a second adhesive.

10. A method for producing a sensor according to any one of claims 1 to 9, **characterised in that** it comprises the following steps:

    - producing a first, a second and a third resonator respectively comprising a first, a second and a third individual piezoelectric substrate, with said first resonator further comprising at least part of a thinned substrate, so as to define three individual chips;
    - assembling said individual chips on the surface of a common base;
    - locally perforating said base so as to release said first substrate ($R_{11}$) and render it operational for variations in pressure.

11. The method for producing a sensor according to claim 10, **characterised in that** it comprises a step of thinning said first substrate, produced by a micromachining method, after assembling said three individual chips onto said base.

12. The production method according to claim 11, **characterised in that** it comprises a step of thinning said first substrate before assembling said chips onto said base.

13. The production method according to any one of claims 11 to 12, **characterised in that** it further comprises a step of placing said cap onto said base.

14. The production method according to any one of claims 11 to 13, **characterised in that** said chips are rigidly connected to said base with an adhesive.

**FIG.1**

**FIG.2**

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060130585 A
- US 20050231067 A